# FASCICULE DE BREVET EUROPEEN

(11) **EP 3 994 379 B1**
(45) Date de publication et mention de la délivrance du brevet: **04.10.2023**
(21) Numéro de dépôt: 20746245.8
(22) Date de dépôt: 29.06.2020
(51) Int. Cl.: F16K 24/04, F16K 15/04, F16K 15/06

(54) **PURGEUR AUTOMATIQUE D'AIR**
AUTOMATISCHER LUFTABLASS
AUTOMATIC AIR DRAINER

(30) Priorité: 01.07.2019 FR 1907269
(43) Date de publication de la demande: 11.05.2022
(73) Titulaire: Desplats, Etienne, 13008 Marseille (FR)
(72) Inventeur: Desplats, Etienne, 13008 Marseille (FR)
(74) Mandataire: IP Trust
(86) Numéro de dépôt international: PCT/FR2020/051129
(87) Numéro de publication internationale: WO 2021/001619

(56) Documents cités:
- EP-A2- 1 867 902
- EP-A2- 2 733 420
- WO-A1-2015/000094
- WO-A1-2016/099424
- FR-A1- 3 035 478
- US-A- 2 998 057
- US-A1- 2006 086 388
- US-A1- 2012 318 794
- US-A1- 2017 120 274

## Description

### Domaine de l'invention

La présente invention concerne le domaine des installations de climatisation, de chauffage et de fourniture d'eau chaude sanitaire. Il s'agit de systèmes en circuits fermés, dont il est important de purger l'air pour éviter divers désagréments voire dysfonctionnements, tels que le bruit, un mauvais rendement de l'installation, une exploitation coûteuse, une circulation perturbée, de la corrosion, ou de formation de gaz tels que l'hydrogène ou le méthane par réaction au contact de divers matériaux ou encore la formation de boues.

Ces réactions se produisent notamment par l'interaction entre des microbulles avec des coudes, au passage de vannes, ou dans des zones en mouvement, par un effet de cavitation et d'arrachage de particules métalliques dites topomagnétites, parfois magnétisées par les mouvements d'arrachage, qui forment des boues qui viennent se déposer dans les conduits.

Les gaz dans l'eau peuvent se présenter sous forme dissoute ou sous forme de bulles libres. S'il y a une surabondance en gaz (air, azote, hydrogène) dans l'eau, les gaz dissous se libèrent sous forme de bulles.

Sous l'influence de la pression et de la température, les poches d'air peuvent en partie se dissoudre dans l'eau, ce qui entraîne une saturation en gaz excessive de l'eau. La diminution de solubilité qui en découle provoque la libération des bulles qui seront véhiculés dans toute l'installation. La vitesse d'écoulement de l'eau dans les tuyaux rendra difficile leurs séparations.

Pour limiter ce phénomène, il est connu de prévoir dans la partie supérieure de l'installation des purgeurs d'air automatique présentant des évents d'air s'ouvrant depuis une chambre vers l'extérieur. L'air et les gaz accumulent dans les zones supérieures de l'installation, et les purgeurs permettent l'évacuation de l'air et des gaz accumulés vers l'extérieur tout en évitant les fuites d'eau.

Ces purgeurs d'air automatique sont installés directement sur des conduites qui ne purgent que très rarement lorsque les pompes de circulations fonctionnent. En présence d'air, un flotteur muni d'un pointeau se trouve en partie basse du purgeur et permet d'évacuer l'air ; quand la pression de l'eau est suffisante le flotteur est en partie haute et le pointeau ferme le purgeur. Accessoirement, ils permettent aussi d'aérer le circuit hydraulique pour faciliter la vidange de l'installation.

Ces purgeurs sont toutefois aussi des voies favorisant l'aspiration d'air dans l'installation : en cas de dépression, par exemple par manque d'eau dans tous les circuits et par aspiration d'O² dans les circuits d'eau glacée (avidité d'O² à basse température), l'air extérieur pénètre par l'évent, et du fait de la dépression migre dans l'eau circulant dans l'installation. De surcroît, l'aspiration peut entraîner des bactéries qui accélèrent des réactions biochimiques conduisant à la formation de dépôts dans les conduits, une fuite importante sur circuit sera catastrophique avec un purgeur traditionnel (appel d'air) alors que le phénomène sera supprimé avec le système breveté.

### État de la technique

La demande de brevet US2006086388 décrit un exemple de purgeur d'air selon le préambule de la revendication 1 pour éliminer le gaz d'un flux de liquide comprend une coque ayant une cavité intérieure pour transporter le flux de liquide. Ce dispositif de ventilation comprend une entrée en communication fluidique avec la cavité de la coque, une sortie en communication fluidique avec l'air ambiant et une chambre reliant l'entrée et la sortie. Un dispositif de soupape à flotteur contrôle l'écoulement de fluide entre la chambre et la sortie. Le dispositif de soupape à flotteur comprend un flotteur qui suit un niveau de liquide dans la chambre. Un bras pivotant est connecté au flotteur et est actionné par le flotteur de telle sorte que le bras pivotant empêche l'écoulement de fluide de la chambre vers la sortie lorsque le niveau du liquide dans la chambre est supérieur à un niveau prédéterminé et permet un écoulement de fluide depuis la chambre à la sortie lorsque le niveau du liquide dans la chambre est inférieur au niveau prédéterminé.

Ce document présente un clapet anti-retour comprenant une sphère retenue dans un espace en forme d'entonnoir par un clip.

Cette solution n'est pas satisfaisante, car la bille n'assure pas une étanchéité suffisante par rapport à son siège conique pour empêcher la pénétration d'air, en raison des phénomènes de turbulences pouvant entraîner des battements de la bille, ainsi par le fait des irrégularités surfaciques formées par des dépôts mous laissant passer l'air entre la bille et son siège.
La demande de brevet US2012318794 ne concerne pas le domaine de l'invention, mais un ensemble de soupape de purge de grade pour un réservoir de carburant d'un véhicule.
De même, le brevet US2998057 concerne un autre domaine, celui des alimentations d'un véhicule en carburant.
La demande de brevet WO20150000094 décrit une soupape d'échappement avec un bouchon de positionnement bouchant l'évacuation d'air.
La demande de brevet EP2733420 concerne encore un autre domaine, celui des séparateur de vapeur pour chaudière à gaz.
La demande de brevet FR3035478 concerne encore un autre domaine et décrit un purgeur automatique d'un circuit hydraulique fermé de liquide de frein automobile.
La demande de brevet WO2016099424 concerne un système de vidange automatique de réservoir qui vidange automatiquement l'eau et d'autres fluides formés dans les réservoirs d'air de véhicules utilitaires dotés de réservoirs d'air sous pression.
La demande de brevet EP1867902 concerne un dispositif pour le dosage d'un milieu cryogénique comprenant au moins une soupape intégrée dans la paroi d'un récipient et pouvant être connectée à une conduite d'alimentation en milieu cryogénique, pour introduire le milieu cryogénique dans le récipient. La soupape est munie de moyens qui, au-dessus d'une pression différentielle prédéfinie entre la pression du milieu cryogénique dans la conduite d'alimentation et la pression dans le récipient, permettent l'introduction du milieu cryogénique, et qui en dessous de la pression différentielle prédéfinie bloquent par contre la soupape.

### Inconvénients de l'art antérieur

Dans les purgeurs automatiques de l'art antérieur, rien n'empêche l'aspiration d'air extérieur en cas de dépression passagère du liquide circulant dans le système de climatisation ou de chauffage. Dans ce cas, l'air peut former des micro-bulles dans le l'eau circulant dans l'installation de climatisation, ou de chauffage ou d'eau chaude sanitaire, avec tous les inconvénients précités.

### Solution apportée par l'invention

Afin de répondre à ces inconvénients, la présente invention concerne selon son acception la plus générale un purgeur automatique d'air conforme à la revendication 1.

### Description détaillée d'un exemple non limitatif de l'invention

La présente invention est décrite dans ce qui suit à d'exemple détaillé non limitatif, illustré par les dessins annexés où :
- [Fig. 1] La figure 1 représente une vue schématique d'un premier exemple de réalisation de l'invention
- [Fig. 2] La figure 2 représente une vue schématique d'un deuxième exemple de réalisation de l'invention
- [Fig. 3] La figure 3 représente une vue schématique d'un troisième exemple de réalisation de l'invention

### Contexte de l'invention

L'invention concerne un domaine spécifique qui est celui des réseaux hydrauliques immobiliers destinés au chauffage, à la climatisation et à la production d'eau chaude saitaire, notamment en milieu collectif. Ces réseaux sont destinés à la circulation d'eau chaude, de température variable, ce qui conduit à des variations du volume de liquide circulant pouvant occasionner la formation de bulles d'air, qui sont évacués par des purgeurs disposés sur des conduits dans la partie haute du réseau. Ces purgeurs permettent à l'air de s'échapper à travers un évent. Pour éviter que l'eau s'échappe également, ces purgeurs comportent un flotteur qui commande la fermeture de l'évent lorsque le niveau du liquide monte dans le purgeur et pourrait atteindre l'évent.
La demande de brevet US2006086388 prévoit en outre un clapet anti-retour formé par une bille reposant sur un siège conique contre lequel il est appuyé par l'effet de la masse de la bille. Il est apparu à l'expérience que ce clapet n'empêche pas l'aspiration d'air dans l'eau circulant dans l'installation, du fait d'une étanchéité imparfait notamment lorsque le purgeur est soumis à des vibrations ou les débits fluidiques traversant l'évent sont turbulents, ou encore lorsque des dépôts de saletés ou de particules ou encore de boues de topomagnétites véhiculées par le liquide se forment dans l'entonoir conique. Ces dépôts forment des concrétions contre lesquelles la bille vient buter, en laissant alors des fuites permettant l'introduction d'air dans le purgeur.
Il en résulte que de l'air extérieur peut quand même pénétrer dans le réseau, dont l'eau chaude qui y circule est avide d'oxygène. Il en résulte des phénomènes de cavitation au niveau des pompes, de formation de microbulles et plus globalement de pitting I et II.

### Premier exemple de réalisation

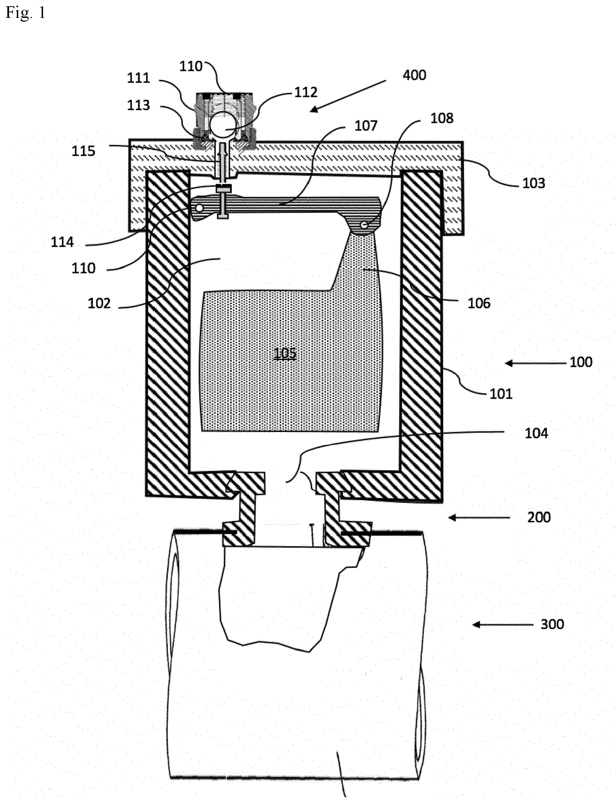

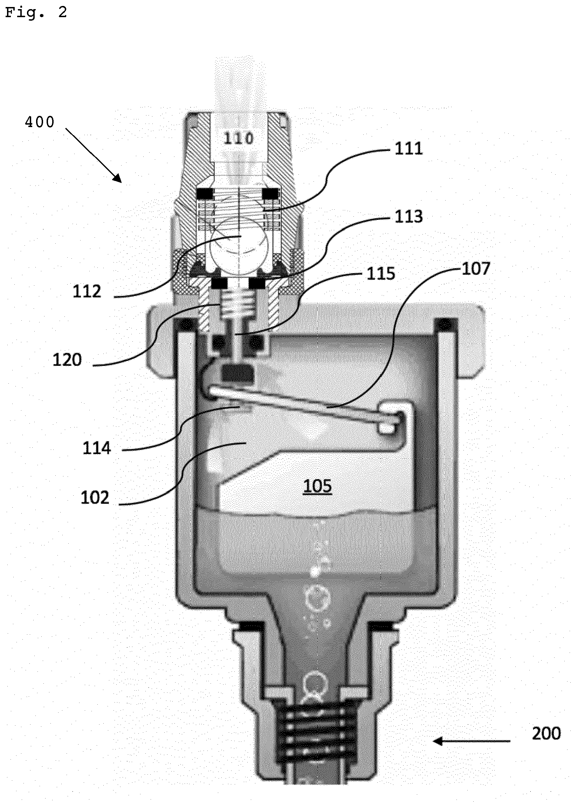

Les figures 1 et 2 représentent des vues d'un exemple de réalisation d'un purgeur automatique d'air selon l'invention, avec une sortie dirigée vers le haut.

Il doit être installé à la verticale, sur la bouteille de découplage, sur les colonnes et en général aux points de l'installation susceptibles de contenir des poches d'air.

Il comporte un purgeur automatique d'air (100) de type connu, et un raccord (200) pour le branchement sur un conduit (300) d'une installation de climatisation, de chauffage ou d'eau chaude sanitaire.

Le purgeur (100) est constitué par un corps (101) métallique définissant une chambre cylindrique (102). La partie frontale supérieure du corps (101) est fermé par un bouchon (103) vissé. La partie frontale inférieur de la chambre (102) présente un passage (104) débouchant dans une conduite (300).

Un flotteur (105) est logé dans la chambre cylindrique (102). Il est prolongé par un bras vertical (106) articulé par rapport à un levier (107) par l'intermédiaire d'un axe (108). L'extrémité opposée du levier (107) est articulée par rapport à un point fixe par l'intermédiaire d'un axe (110). Le bouchon (103) comporte un perçage débouchant dans un évent (110) présentant deux perçages latéraux permettant à l'air et aux gaz de s'échapper vers l'extérieur.

Une soupape (115) muni d'un obturateur (114) est mobile à l'intérieur de l'évent, et assure la fermeture lorsque le flotteur (105) est en position haute.

Un ressort (120) repousse la soupape (115) en position de fermeture par défaut. L'accumulation de bulles d'air dans le corps du purgeur (102) provoque la descente du flotteur (105) et l'ouverture de l'obturateur (114). Ce phénomène, dont dépend le bon fonctionnement du purgeur, se poursuit tant que la pression de l'eau reste inférieure à la pression maxi de vidange.

Une fois que l'air a été extrait, le fluide remplit de nouveau la chambre (102) du purgeur (100), et le flotteur (105), se soulève et permet la fermeture de l'obturateur (114).

Le clapet anti-retour (400) est disposé verticalement dans les exemples illustrés par les figures 1 et 2, pour permettre le passage d'un flux liquide et gazeux depuis le corps (102) vers l'orifice (110) seulement en cas de surpression dans le circuit de chauffage sur lequel le dispositif est raccordé. Une bille (112) repose sur un joint annulaire (113) au repos. Un ressort (111) repousse cette bille (112) vers le joint annulaire (113). Lorsqu'une dépression se crée dans le système de climatisation ou de chauffage ou dans la chambre (102), la bille (112) vient obturer la prise d'air supérieure et empêche la pénétration d'air dans le circuit.

La déformation des lèvres en élastomères permet d'assurer une parfaite étanchéité pour réduire la diffusion d'air et de gaz depuis la chambre (102) dans le liquide de chauffage.

Un ressort (111) très doux en un alliage de nickel-chrome-molybdène avec ajout de tungstène, par exemple Hastelloy (nom commercial) ou autre matériau résistant à la corrosion repousse la bille (112) ou le clapet contre le siège (113) pour assurer la fermeture au repos du passage.

Le ressort présente une raideur comprise entre 0,2 et 0,4 N/mm, et de préférence de 0,28N/mm. Il présente typiquement une longueur comprise entre 0,8 et 20 mmm, typiquement de 12 mm, c'est donc très léger et c'est pour être certain qu'il ramène le piston sur son siège. Typiquement, le module d'élasticité est de 205.5 kN/mm²±5%.

### Variante latérale

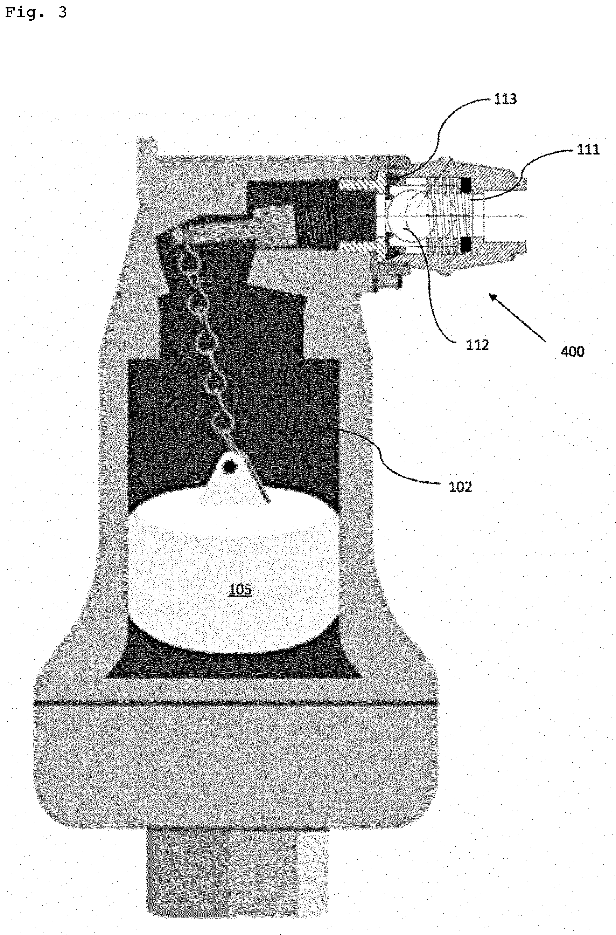

La figure 3 représente une autre variante de réalisation où l'évent est disposé latéralement. Le débouché de la chambre (102) munie d'un flotteur (105) est prolongé par une valve (400) comprenant une bille (112) repoussée contre un joint annulaire (113) par un ressort (111).

Lorsqu'une dépression se forme dans la chambre du purgeur, la bille vient se coller contre le joint (113) et empêche la pénétration d'air dans le circuit de chauffage. Par contre lorsqu'il règne une pression supérieure à la pression atmosphérique, l'évent permet aux vapeurs contenues dans la chambre (102) de s'échapper.

L'ensemble (400) peut notamment constituer un accessoire adaptable à un purgeur automatique, afin de limiter l'introduction d'air en cas de dépression dans l'installation équipée du purgeur.

## Revendications

1. - Purgeur automatique d'air (100) constitué par un corps creux (101) prolongé à sa partie inférieure par un raccord pour le branchement sur un conduit d'une installation d'un réseau d'immeuble d'eau glacée, d'eau chaude sanitaire et/ou de chauffage, et présentant à sa partie supérieure un évent (110) communiquant avec une chambre (102) formée par ledit corps creux (101), ladite chambre (102) contenant un flotteur (105) commandant le déplacement d'un obturateur (114) entre une position de repos assurant la fermeture dudit évent (110) et une position de dégazage correspondant à un niveau bas dudit flotteur, dans laquelle ledit obturateur libère le passage d'air entre ladite chambre et ledit évent (110), ledit évent (110) comportant un clapet (112), mobile entre une position de repos où ledit clapet (112) obture un siège (113) disposé transversalement par rapport audit évent (110), et une position où ledit clapet (112) est écarté dudit siège par la pression liquide ou gazeuse en amont dudit siège **caractérisé en ce qu'**il comporte un ressort (111) repoussant ledit clapet (112) contre le siège (113) pour assurer la fermeture au repos et **en ce que** ledit obturateur (114) est solidaire d'une soupape (115) mobile à l'intérieur dudit évent (110), pour assurer la fermeture lorsque le flotteur (105) est en position haute, un ressort (120) repoussant ladite soupape (115) en position de fermeture par défaut.

2. - Purgeur automatique d'air selon la revendication 1 **caractérisé en ce que** ledit ressort (120) de soupape est en alliage de nickel-chrome-molybdène avec ajout de tungstène.

3. - Purgeur automatique d'air selon la revendication 1 **caractérisé en ce que** ledit clapet (112) est formé par une bille apte à assurer la fermeture étanche en appui contre le siège (113) de forme complémentaire.

4. - Purgeur automatique d'air selon la revendication 1 **caractérisé en ce que** ladite soupape (115) est formée par une tige prolongée par ledit obturateur(114), un raccord comportant au moins un guide pour le coulissement axial de ladite tige et un siège de forme complémentaire audit obturateur.

5. - Purgeur automatique d'air selon la revendication 1 **caractérisé en ce que** ledit clapet (112) est disposé dans ledit évent (110) s'ouvrant à la partie frontale supérieure de ladite chambre (102).

6. - Purgeur automatique d'air selon la revendication 1 **caractérisé en ce que** ledit clapet (112) est disposé dans ledit évent (110) s'ouvrant à la partie latérale de ladite chambre (102).

7. - Purgeur automatique d'air selon la revendication 1 **caractérisé en ce que** ledit purgeur automatique comprend un ensemble comprenant un deuxième corps creux présentant un deuxième raccord pour la fixation sur l'évent du purgeur automatique, ledit corps creux contenant le clapet (112) ledit ensemble constituant un accessoire.

## Patentansprüche

1. Automatischer Entlüfter (100), gebildet aus einem hohlen Körper (101), der an seinem unteren Teil durch ein Formstück zum Anschluss an eine Leitung einer Installation eines Gebäudenetzes für Eiswasser, Warmwasser und/oder Heizungswasser verlängert ist und an seinem oberen Teil eine Entlüftungsöffnung (110) aufweist, die mit einer Kammer (102) in Verbindung steht, die durch den hohlen Körper (101) gebildet wird, wobei die Kammer (102) einen Schwimmer (105) enthält, der die Bewegung eines Verschlusses (114) zwischen einer Ruheposition, die den Verschluss der Entlüftungsöffnung (110) sicherstellt, und einer Entgasungsposition steuert, die einer niedrigen Höhe des Schwimmers entspricht, in welcher der Verschluss den Luftdurchgang zwischen der Kammer und der Entlüftungsöffnung (110) freigibt, wobei die Entlüftungsöffnung (110) ein Verschlusselement (112) aufweist, das zwischen einer Ruheposition, in der das Verschlusselement (112) einen Sitz (113) verschließt, der quer zu der Entlüftungsöffnung (110) angeordnet ist, und einer Position, in der das Verschlusselement (112) durch den Flüssigkeits- oder Gasdruck stromaufwärts des Sitzes von dem Sitz weggedrückt wird, beweglich ist, **dadurch gekennzeichnet, dass** er eine Feder (111) aufweist, die das Verschlusselement (112) gegen den Sitz (113) drückt, um den Verschluss in Ruheposition sicherzustellen, und dass der Verschluss (114) fest mit einem Ventil (115) verbunden ist, das im Inneren der Entlüftungsöffnung (110) beweglich ist, um das Verschließen sicherzustellen, wenn sich der Schwimmer (105) in der hohen Position befindet, wobei eine Feder (120) das Ventil (115) gezwungen in die Verschlussposition drückt.

2. Automatischer Entlüfter nach Anspruch 1, **dadurch gekennzeichnet, dass** die Ventilfeder (120) aus einer Nickel-Chrom-Molybdän-Legierung mit Wolframzusatz besteht.

3. Automatischer Entlüfter nach Anspruch 1,
**dadurch gekennzeichnet, dass** das Verschlusselement (112) durch eine Kugel gebildet ist, die geeignet ist, bei Auflage gegen den komplementär geformten Sitz (113) den dichten Verschluss sicherzustellen.

4. Automatischer Entlüfter nach Anspruch 1, **dadurch gekennzeichnet, dass** das Ventil (115) durch einen Stab gebildet ist, der durch den Verschluss (114) verlängert wird, wobei ein Formstück mindestens eine Führung für die axiale Verschiebung des Stabs und einen Sitz mit einer zum Verschluss komplementären Form aufweist.

5. Automatischer Entlüfter nach Anspruch 1, **dadurch gekennzeichnet, dass** das Verschlusselement (112) in der Entlüftungsöffnung (110) angeordnet ist, die an dem oberen Vorderteil der Kammer (102) geöffnet ist.

6. Automatischer Entlüfter nach Anspruch 1, **dadurch gekennzeichnet, dass** das Verschlusselement (112) in der Entlüftungsöffnung (110) angeordnet ist, die an dem seitlichen Teil der Kammer (102) geöffnet ist.

7. Automatischer Entlüfter nach Anspruch 1, **dadurch gekennzeichnet, dass** der automatische Entlüfter eine Baugruppe umfasst, die einen zweiten hohlen Körper mit einem zweiten Formstück für die Befestigung an der Entlüftungsöffnung des automatischen Entlüfters umfasst, wobei der hohle Körper das Verschlusselement (112) enthält, wobei die Baugruppe ein Zubehörteil bildet.

## Claims

1. An automatic air eliminator (100) consisting of a hollow body (101) which is extended at its lower portion by a connector so as to be connected on a pipe of a system in a building network for cold water, domestic hot water and/or heating, and which has at the upper portion thereof a vent (110) in communication with a chamber (102) formed by said hollow body (101), said chamber (102) containing a float (105) controlling the movement of a shutter (114) between a resting position for closing said vent (110) and a venting position which corresponds to said float being at a lowered level and in which said shutter allows air to pass between said chamber and said vent (110), said vent (110) comprising a check valve (112), movable between a resting position in which said check valve (112) shuts off a seat (113) arranged transversely relative to said vent (110), and a position in which said check valve (112) is separated from said seat by the liquid or gas pressure upstream of said seat, **characterized in that** it comprises a spring (111) pushing said check valve (112) against the seat (113) so as to ensure closure at rest, and **in that** said shutter (114) is rigidly connected to a valve (115) which is movable inside said vent (110) so as to ensure closure when the float (105) is in raised position, a spring (120) pushing said valve (115) into the default closed position.

2. The automatic air eliminator according to claim 1, **characterized in that** said valve spring (120) is made of a nickel-chromium-molybdenum alloy with the addition of tungsten.

3. The automatic air eliminator according to claim 1, **characterized in that** said check valve (112) is formed by a ball suitable for ensuring sealed closure by bearing against the seat (113) having a complementary shape.

4. The automatic air eliminator according to claim 1, **characterized in that** said valve (115) is formed by a rod extended by said shutter (114), a connector comprising at least one guide for the axial sliding of said rod, and a seat having a shape complementary to said shutter.

5. The automatic air eliminator according to claim 1, **characterized in that** said check valve (112) is arranged in said vent (110) opening into the upper front portion of said chamber (102).

6. The automatic air eliminator according to claim 1, **characterized in that** said check valve (112) is arranged in said vent (110) opening into the side portion of said chamber (102).

7. The automatic air eliminator according to claim 1, **characterized in that** said automatic eliminator comprises an assembly that comprises a second hollow body having a second connector for securing on the vent of the automatic eliminator, said hollow body containing the check valve (112), said assembly constituting an accessory.
